# EUROPEAN PATENT APPLICATION

(11) **EP 4 245 877 A1**
(43) Date of publication of application: **20.09.2023**
(21) Application number: 21906551.3
(22) Date of filing: 13.12.2021
(51) Int. Cl.: C22C 38/00, C22C 38/58, H01M 4/66

(54) **CHROMIUM-CONTAINING STEEL SHEET FOR CURRENT COLLECTORS FOR NONAQUEOUS ELECTROLYTE SECONDARY BATTERIES**

(30) Priority: 15.12.2020 JP 2020207194
(71) Applicant: JFE Steel Corporation, Tokyo 100-0011 (JP)
(72) Inventor: YANO, Takayoshi, Tokyo 100-0011 (JP); MIZUTANI, Akito, Tokyo 100-0011 (JP); IKEDA, Kazuhiko, Ashigarakami-gun, Kanagawa 258-0112 (JP); FUJII, Tomoko, Ashigarakami-gun, Kanagawa 258-0112 (JP); MATSUNAGA, Hiroshi, Ashigarakami-gun, Kanagawa 258-0112 (JP)
(74) Representative: Haseltine Lake Kempner LLP
(86) International application number: PCT/JP2021/045740
(87) International publication number: WO 2022/131189

(57) **Abstract**

Provided is a chromium-containing steel sheet for a current collector of a nonaqueous electrolyte secondary battery. The chromium-containing steel sheet has excellent corrosion resistance in a battery environment and allows the nonaqueous electrolyte secondary battery to have excellent rate characteristics and cycle characteristics when used as a current collector of the secondary battery.

The chromium-containing steel sheet for a current collector of a nonaqueous electrolyte secondary battery has a chemical composition containing Cr in an amount of 10% by mass or more. A parameter Sa defined in ISO 25178 is from 0.15 um to 0.50 um inclusive, and a parameter Ssk defined in ISO 25178 is more than 0.

## Description

### Technical Field

The present invention relates to a chromium-containing steel sheet for a current collector of a nonaqueous electrolyte secondary battery and, in particular, to a chromium-containing steel sheet for a current collector of a nonaqueous electrolyte lithium ion secondary battery.

### Background Art

In recent years, from the viewpoint of global environmental conservation, the production of electric vehicles (EVs) equipped with lithium ion secondary batteries (LIBs) has been increasing.

In an LIB, an Al foil is mainly used for a positive electrode current collector, and a Cu foil is mainly used for a negative electrode current collector. For the purpose of improving the durability of LIBs, it has been contemplated to apply stainless steel foils having higher strength and higher corrosion resistance to current collectors of the LIBs.

For example, Patent Literature 1 discloses a bipolar battery in which stainless steel containing 16 to 26% by mass of Cr and 0.5 to 7% by mass of Mo is used for a current collector foil. In this bipolar battery, even when the current collector foil is used at a high potential (about 4.2 V) for a long time, corrosion and dissolution of the current collector foil do not occur, and the battery characteristics are unlikely to deteriorate.

Patent Literature 2 discloses ferritic stainless steel for a battery component member that contains Cr: 16.0 to 32.0%, C: 0.015% or less, Si: 0.5% or less, and Mn: 2.0% or less and that has, as a surface layer, a passive film having a composition ratio Cr/(Cr + Fe) > 0.2 and a thickness of 4 nm or less. In this ferritic stainless steel, even when a high voltage is applied to the battery, high corrosion resistance is maintained, and sparking is unlikely to occur.

### Citation List

### Patent Literature

PTL 1: Japanese Unexamined Patent Application Publication No. 2007-242424
PTL 2: Japanese Unexamined Patent Application Publication No. 2009-167486
PTL 3: Japanese Unexamined Patent Application Publication No. 2010-33782

### Summary of Invention

### Technical Problem

The stainless steel described in Patent Literature 1 and the stainless steel described in Patent Literature 2 were actually used for current collectors of lithium ion secondary batteries, and their battery performance was evaluated. The results showed that, in some cases, the battery capacity was more likely to decrease when the discharge rate was high or the batteries were repeatedly charged and discharged, as compared to the case where Al foils or Cu foils were used for the current collectors.

Although the reason for the deterioration in battery capacity characteristics when the discharge rate is high (which is hereinafter referred to as "rate characteristics") and the deterioration in battery capacity characteristics when charging and discharging are repeatedly performed (which is hereinafter referred to as "cycle characteristics") is unclear, the present inventors have thought that the reason is as follows. Al foils and Cu foils that are mainly used for current collectors of lithium ion secondary batteries have surfaces with high electrical conductivity. However, since a stable passive film is formed on the surface of each of the above stainless steel sheets, the electrical conductivity at the surface is lower than that at the surfaces of the Al and Cu foils. Therefore, when the stainless steel sheet is used, the electrical resistance at the interface between the current collector and a battery active material layer formed on the current collector (this electrical resistance is hereinafter referred to as the "interface resistance") tends to be higher than that when the Al or Cu foil is used, and this may cause deterioration in rate characteristics and cycle characteristics. Moreover, when charging and discharging are repeated, a film having high electrical resistance may be formed on the surface of the stainless steel sheet. This may cause an increase in the interface resistance and deterioration in cycle characteristics.

Moreover, a steel sheet for a current collector of a nonaqueous electrolyte lithium ion secondary battery is required to have corrosion resistance in a battery environment. Specifically, it is necessary to prevent deterioration in battery characteristics that can occur when the steel sheet is corroded in a nonaqueous electrolyte lithium ion secondary battery environment.

When the corrosion resistance of the steel sheet for a current collector of a nonaqueous electrolyte lithium ion secondary battery is low in the battery environment, corrosion products may be formed on the surface of the current collector, or corrosion pits may be formed on the surface. The inventors have thought that the battery characteristics deteriorate because the corrosion products or the corrosion pits inhibit electron transfer between the surface of the current collector and the active material.

The environment to which the current collector of the nonaqueous electrolyte lithium ion secondary battery is exposed is a special environment which is in a nonaqueous electrolyte containing a Li salt such as LiPF₆, LiBF₄, or LiClO₄ dissolved in an organic solvent such as dimethyl carbonate, diethyl carbonate, ethylene carbonate, or ethyl methyl carbonate and to which a potential in the range of 0.0 to 5.0 V (vs. Li/Li⁺) is applied (this environment is hereinafter referred to as the "battery environment").

The inventors have conceived that, when the content of Cr in the chromium-containing steel sheet is more than or equal to a certain value, the Cr oxide film formed on the surface of the steel sheet in the battery environment described above is stabilized, so that sufficient corrosion resistance can be obtained in the battery environment.

The present invention has been made in view of the circumstances described above, and it is an object to provide a chromium-containing steel sheet for a current collector of a nonaqueous electrolyte secondary battery. The chromium-containing steel sheet has excellent corrosion resistance in the battery environment and allows the nonaqueous electrolyte secondary battery to have excellent rate characteristics and excellent cycle characteristics, when used as a current collector of a nonaqueous electrolyte secondary battery.

### Solution to Problem

The inventors have conducted extensive studies in order to solve the problem described above.

As described above, the inventors have conceived that the deterioration in the rate characteristics and cycle characteristics of a battery is due to an increase in the interface resistance between the current collector and the battery active material layer formed thereon.

Patent Literature 3 discloses a current collector for a lithium ion secondary battery that is formed from a ferritic stainless steel sheet having a composition containing, in mass %, Cr: 12 to 32%, C: 0.015% or less, Si: 0.5% or less, and Mn: 2% or less, with the balance being Fe and incidental impurities and that has a roughened surface having a surface roughness SPa of 0.1 um or more. It is also stated in Patent Literature 3 that, by roughening the surface of the stainless steel sheet so that part of an active material layer enters pits on the roughened surface, the adhesion between the current collector and the active material layer is improved and that the area of contact therebetween is increased, so that the contact resistance between the stainless steel sheet and the active material layer can be significantly reduced. However, the results of inventors' studies on the roughening of the steel sheet surface have shown that, to improve the rate characteristics and cycle characteristics of the battery, it is insufficient to increase only the surface roughness SPa to 0.1 um or more.

Accordingly, the inventors have conducted detailed studies on the influence of the surface profile of the chromium-containing steel sheet on the battery characteristics in order to reduce the increase in interface resistance. Then the inventors have thought that the rate characteristics and cycle characteristics of the battery can be improved when a specific surface profile parameter can be controlled appropriately.

Specifically, the inventors have reached the following conclusion to improve the rate characteristics and cycle characteristics. An irregular structure including protruding portions having a sharp top shape is formed on the surface of the chromium-containing steel sheet such that the protruding portions stick into the electrode active material and the area of contact between the steel sheet surface and the electrode active material increases, and thereby, the interface resistance may be reduced.

The inventors have conducted further studies on the basis of the above idea and found that, by forming a prescribed irregular structure on the surface of a chromium-containing steel sheet, the rate characteristics and cycle characteristics can be improved even when the chromium-containing steel sheet is used for a current collector of a nonaqueous electrolyte secondary battery.

The inventors have also found that the prescribed irregular structure can be formed using the following procedure and the rate characteristics and cycle characteristics of the battery can thereby be improved. A chromium-containing steel sheet used as a raw material (a raw material chromium-containing steel sheet) is subjected to first immersion treatment, i.e., immersion treatment in which an acidic aqueous solution containing hydrogen peroxide, copper ions, and halide ions is used with the treatment temperature and the treatment time set to 30 to 50°C and 40 to 90 seconds, respectively. After the first immersion treatment, second immersion treatment is performed. The second immersion treatment is (A) immersion treatment in which an acidic aqueous solution containing hydrogen peroxide is used with the treatment temperature and the treatment time set to 30 to 60°C and 5 to 120 seconds, respectively, (B) immersion treatment in which an aqueous solution containing nitric acid is used with the treatment temperature and the treatment time set to 30 to 60°C and 5 to 120 seconds, respectively, or (C) immersion treatment that is a combination of (A) and (B).

When the second immersion treatment is performed using the aqueous solution containing nitric acid such that the ratio of the total atomic concentration of Cr and Fe present in non-metallic form on the surface of the chromium-containing steel sheet to the total atomic concentration of Cr and Fe present in metallic form on the surface of the chromium-containing steel sheet, i.e., [(Cr + Fe) in non-metallic form] / [(Cr + Fe) in metallic form], is controlled to 8.0 or less, the interface resistance reducing effect obtained can be higher.

Specifically, when smut (a mixture containing C, N, S, O, Fe, Cr, Ni, and Cu as main elements and having high electrical resistance) formed on the surface of the steel sheet remains on the surface after the first immersion treatment (etching treatment), the smut may cause an increase in interface resistance, although the desired irregular structure is obtained. However, by performing the above-described second immersion treatment (smut removal treatment) after the etching treatment, the smut is removed, and the interface resistance reducing effect can be obtained stably. In particular, by using the aqueous solution containing nitric acid as the treatment liquid of the second immersion treatment, the interface resistance reducing effect obtained can be higher.

The amount of the smut on the steel sheet surface is correlated with [(Cr + Fe) in non-metallic form] / [(Cr + Fe) in metallic form]. When [(Cr + Fe) in non-metallic form] / [(Cr + Fe) in metallic form] is small, it can be said that the smut has been removed sufficiently. Therefore, the inventors have thought that, by controlling [(Cr + Fe) in non-metallic form] / [(Cr + Fe) in metallic form] to 8.0 or less, the interface resistance is further reduced and that, even when the chromium-containing steel sheet is used for a current collector of a nonaqueous electrolyte secondary battery, its rate characteristics and cycle characteristics can be further improved.

The present invention has been completed as a result of further studies based on the above findings. Specifically, the summary of the present invention is as follows.
[1] A chromium-containing steel sheet for a current collector of a nonaqueous electrolyte secondary battery, the chromium-containing steel sheet having a chemical composition containing Cr in an amount of 10% by mass or more, wherein a parameter Sa defined in ISO 25178 is from 0.15 um to 0.50 um inclusive, and wherein a parameter Ssk defined in ISO 25178 is more than 0.
[2] The chromium-containing steel sheet for a current collector of a nonaqueous electrolyte secondary battery according to [1], wherein [(Cr + Fe) in non-metallic form] / [(Cr + Fe) in metallic form] is 8.0 or less,
   where [(Cr + Fe) in non-metallic form] / [(Cr + Fe) in metallic form] is the ratio of the total of Cr and Fe present in non-metallic form on a surface of the chromium-containing steel sheet to the total of Cr and Fe present in metallic form on the surface of the chromium-containing steel sheet.

### Advantageous Effects of Invention

According to the present invention, a chromium-containing steel sheet can be obtained, which has excellent corrosion resistance in the battery environment and which, when used as a current collector of a nonaqueous electrolyte secondary battery, allows the battery to have excellent rate characteristics and excellent cycle characteristics.

By using the chromium-containing steel sheet of the invention for a current collector of a nonaqueous electrolyte secondary battery, the rate characteristics and cycle characteristics of the battery can be improved. The chromium-containing steel sheet of the invention is particularly suitable for a current collector of a nonaqueous electrolyte lithium ion secondary battery.

### Brief Description of Drawings

[Fig. 1] A schematic illustration (cross-sectional view) showing the state of contact when a chromium-containing steel sheet (current collector) according to an embodiment of the present invention is in contact with an electrode active material.
[Fig. 2] Schematic illustrations (cross-sectional views) showing the surface state when the value of Ssk (skewness) is positive (more than 0) and the surface state when the value of Ssk (skewness) is negative (less than 0). Description of Embodiments

### (1) Chromium-containing steel sheet for current collector of nonaqueous electrolyte secondary battery

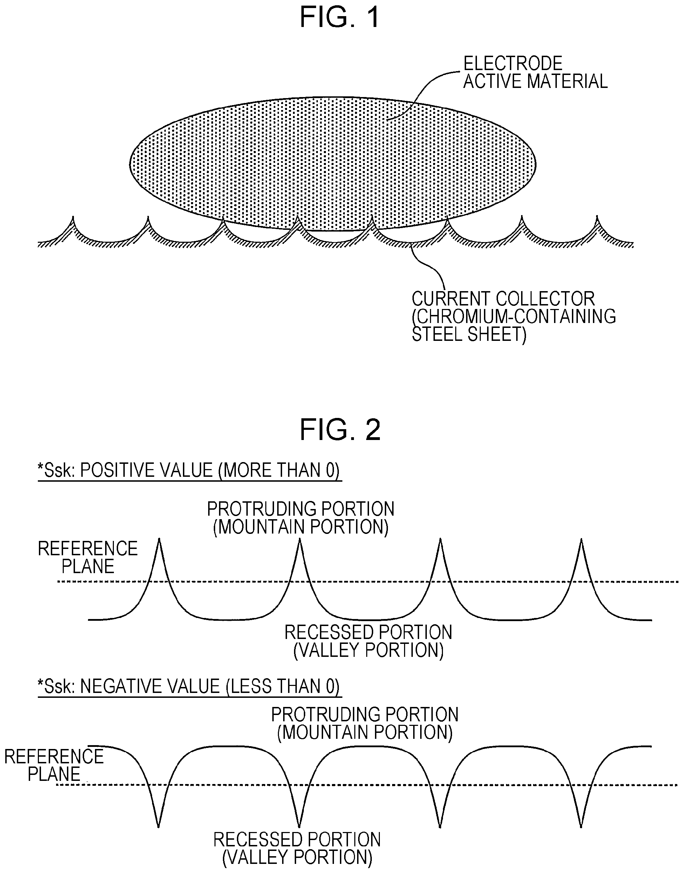

A chromium-containing steel sheet for a current collector of a nonaqueous electrolyte secondary battery according to an embodiment of the present invention will be described. In the chromium-containing steel sheet for a current collector of a nonaqueous electrolyte secondary battery according to the embodiment of the present invention, it is important to provide a prescribed irregular structure on a surface of the steel sheet. Owing to the irregular structure, protruding portions (mountain portions) having a sharp top shape on the surface of the chromium-containing steel sheet stick into an electrode active material, as shown in Fig. 1. Moreover, the area of contact between the steel sheet surface and the electrode active material increases. Therefore, it is expected to obtain the effect of reducing the interface resistance between the current collector and the battery active material layer formed thereon. This interface resistance reducing effect provides the effect of improving the rate characteristics and cycle characteristics of the battery. In the present description, the chromium-containing steel sheet for a current collector of a nonaqueous electrolyte secondary battery according to the present invention is also referred to simply as the chromium-containing steel sheet.

### [Parameter Sa defined in ISO 25178: from 0.15 um to 0.50 um inclusive]

As described above, it is important to provide the prescribed irregular structure on a surface of the chromium-containing steel sheet. From the viewpoint of obtaining excellent rate characteristics and excellent cycle characteristics, it is necessary that the parameter Sa of the prescribed irregular structure that is defined in ISO 25178 be from 0.15 um to 0.50 um inclusive. The Sa is a surface roughness parameter defined in ISO 25178 and indicates an arithmetic mean height. The arithmetic mean height is the average of the absolute values of differences in height between the average plane of the surface and measured points on the surface and is a parameter generally used to evaluate the surface roughness.

If Sa is less than 0.15 um, the height of the protruding portions (mountain portions) is excessively small. In this case, the protruding portions on the surface of the chromium-containing steel sheet do not sufficiently stick into the electrode active material, or the area of contact with the electrode active material is not sufficiently increased, so that the interface resistance is not reduced. As a result, the rate characteristics and the cycle characteristics deteriorate. If Sa is more than 0.50 um, the amount of dissolution during the etching treatment and thus the etching time increase, and this is disadvantageous in terms of productivity. In addition, if the etching treatment is performed such that Sa is more than 0.50 um, the thickness of the current collector becomes uneven. In this case, the etching proceeds locally, and thin portions are formed, so that the current collector can easily break. Therefore, Sa is from 0.15 um to 0.50 um inclusive. Sa is preferably 0.20 um or more.

### [Parameter Ssk (skewness) defined in ISO 25178: more than 0]

Ssk is a surface roughness parameter defined in ISO 25178 and indicates the symmetricalness of the height distribution. As shown in Fig. 2, when the value of Ssk (skewness) is positive (more than 0), the top end (upper end portion) of each protruding portion (mountain portion) is sharp, and the bottom end (lower end portion) of each recessed portion (valley portion) is wide (close to flat). If the value of Ssk is negative (less than 0), the top end of each protruding portion (mountain portion) is wide, and the bottom end (lower end portion) of each recessed portion (valley portion) is sharp. Therefore, when Ssk is more than 0, the top ends of the protruding portions (mountain portions) on the surface of the steel sheet are sharp, and the protruding portions on the steel sheet surface that have a sharp top shape can easily stick into the electrode active material, and the interface resistance is reduced. However, if Ssk is less than 0, the top ends of the protruding portions (mountain portions) on the surface of the steel sheet are flat. Therefore, the protruding portions on the steel sheet surface do not easily stick into the electrode active material, and the interface resistance does not tend to decrease. Preferably, Ssk is 0.10 or more. No particular limitation is imposed on the upper limit of Ssk. However, by preventing an excessive increase in Ssk, a reduction in the number of protruding portions can be easily prevented, and the interface resistance reducing effect can be obtained more stably. Therefore, Ssk is preferably 1.00 or less and more preferably 0.50 or less.

Sa and Ssk may be measured according to ISO 25178. A laser microscope may be used as the measurement device. In the chromium-containing steel sheet for a current collector of a nonaqueous electrolyte secondary battery according to the embodiment of the present invention, it is only necessary that at least one of the surfaces (the surface to be in contact with the electrode active material) have an Sa of from 0.15 um to 0.50 um inclusive and an Ssk of more than 0. In a chromium-containing steel sheet produced through etching treatment described later, both surfaces generally have an Sa of from 0.15 um to 0.50 um inclusive and an Ssk of more than 0.

### [Chemical composition of chromium-containing steel sheet]

The chromium-containing steel sheet of the present invention has a chemical composition containing Cr in an amount of 10% by mass or more. Cr is effective in improving corrosion resistance in the battery environment. When the Cr content is 10% by mass or more, sufficient corrosion resistance can be obtained in the battery environment even when the chromium-containing steel sheet is used for a current collector of a nonaqueous electrolyte secondary battery, particularly for a current collector of a nonaqueous electrolyte lithium ion secondary battery. In the chromium-containing steel sheet of the present invention, no particular limitation is imposed on the components other than Cr. A preferred chemical composition is as follows.

### [Preferred chemical composition of chromium-containing steel sheet]

Preferably, the chromium-containing steel sheet of the invention has a chemical composition containing, in mass %, C: 0.001 to 0.100%, Si: 0.01 to 2.00%, Mn: 0.01 to 2.00%, P: 0.050% or less, S: 0.010% or less, Cr: 10.00 to 32.00%, Ni: 0.01 to 30.00%, Al: 0.001 to 0.500%, and N: 0.100% or less, with the balance being Fe and incidental impurities. The chemical composition may optionally contain, in mass %, one or two or more selected from the group consisting of Mo: 0.01 to 2.50%, Cu: 0.01 to 0.80%, Ti: 0.01 to 0.45%, Nb: 0.01 to 0.60%, and V: 0.01 to 0.30%.

The reasons for the above will be described below. Note that "%" in the chemical composition means "% by mass" unless otherwise specified.

### C: 0.001 to 0.100%

C combines with Cr in the steel and precipitates as Cr carbide at grain boundaries to form Cr-depleted zones, and this causes a reduction in corrosion resistance. Therefore, from the viewpoint of corrosion resistance, the lower the C content, the better. The C content is preferably 0.100% or less. The C content is more preferably 0.030% or less and still more preferably 0.020% or less. No particular limitation is imposed on the lower limit of the C content, but the lower limit is preferably 0.001%.

### Si: 0.01 to 2.00%

Si is an element effective for deoxidization and is added in the steelmaking stage. The effect of Si is obtained when its content is 0.01% or more. Therefore, the Si content is preferably 0.01% or more. If the Si content is excessively large, the steel becomes hard, and manufacturability deteriorates. Therefore, the Si content is preferably 2.00% or less. The Si content is more preferably 1.00% or less and still more preferably 0.60% or less.

### Mn: 0.01 to 2.00%

Mn is an element effective for deoxidization and is added in the steelmaking stage. The effect of Mn is obtained when its content is 0.01% or more. Therefore, the Mn content is preferably 0.01% or more. If the Mn content exceeds 2.00%, corrosion resistance tends to deteriorate. Therefore, the Mn content is preferably 2.00% or less. The Mn content is more preferably 0.60% or less.

### P: 0.050% or less

P causes deterioration in ductility. Therefore, the smaller the P content, the better. However, when the P content is 0.050% or less, no significant deterioration in ductility occurs. Therefore, the P content is preferably 0.050% or less. The P content is more preferably 0.040% or less. No particular limitation is imposed on the lower limit of the P content. However, excessive dephosphorization results in an increase in manufacturing cost. Therefore, the P content is preferably 0.010% or more.

### S: 0.010% or less

S is an element that combines with Mn to form MnS that serves as starting points of corrosion, and this causes deterioration in corrosion resistance. However, when the S content is 0.010% or less, no significant deterioration in corrosion resistance occurs. Therefore, the S content is preferably 0.010% or less. No particular limitation is imposed on the lower limit of the S content. However, excessive desulfurization results in an increase in manufacturing cost. Therefore, the S content is preferably 0.001% or more.

### Cr: 10.00 to 32.00%

When the content of Cr is 10% or more, sufficient corrosion resistance can be obtained in the battery environment even when the chromium-containing steel sheet is used for a current collector of a nonaqueous electrolyte secondary battery, particularly for a current collector of a nonaqueous electrolyte lithium ion secondary battery. Therefore, the Cr content is 10% or more. The Cr content is preferably 10.00% or more and more preferably 16.00% or more. If the Cr content exceeds 32.00%, precipitation of the σ phase may occurs, and this may cause deterioration in toughness. Therefore, the Cr content is preferably 32.00% or less. The Cr content is more preferably 25.00% or less.

### Ni: 0.01 to 30.00%

Ni is an element effective in improving the corrosion resistance of the stainless steel. Ni is generally contained in a certain amount in austenitic stainless steel and ferrite-austenite duplex stainless steel. If the Ni content exceeds 30.00%, hot workability deteriorates. Therefore, when Ni is contained, the Ni content is set to 30.00% or less. The Ni content is more preferably 20.00% or less. The Ni content is preferably 0.01% or more.

A preferred lower limit of the Ni content in austenitic stainless steel and ferrite-austenite duplex stainless steel is 2.00%.

When ferritic stainless steel contains Ni, the Ni content is preferably 2.00% or less and more preferably 1.00% or less. A preferred lower limit of the Ni content in the ferritic stainless steel is 0.01%.

### Al: 0.001 to 0.500%

Al is an element used for deoxidization. The effect of Al is obtained when its content is 0.001% or more. Therefore, the Al content is preferably 0.001% or more. If the Al content exceeds 0.500%, ductility deteriorates. Therefore, the Al content is preferably 0.500% or less. The Al content is more preferably 0.150% or less and still more preferably 0.100% or less.

### N: 0.100% or less

If the content of N exceeds 0.100%, ductility deteriorates. Therefore, the N content is preferably 0.100% or less. The N content is more preferably 0.030% or less. No particular limitation is imposed on the lower limit of the N content, but excessive denitrification causes an increase in cost. Therefore, the N content is preferably 0.002% or more.

Preferably, the elements described above are used as basic components. In the present invention, elements described below may be optionally contained.

### Mo: 0.01 to 2.50%

Mo is an element effective in improving corrosion resistance. The effect of Mo is preferably obtained when its content is 0.01% or more. However, if the Mo content exceeds 2.50%, embrittlement of the steel occurs. Therefore, when Mo is contained, the Mo content is preferably 0.01 to 2.50%.

### Cu: 0.01 to 0.80%

Cu is an element effective in improving corrosion resistance. The effect of Cu is preferably obtained when its content is 0.01% or more. However, if the Cu content exceeds 0.80%, hot workability deteriorates, and this results in a reduction in productivity. Therefore, when Cu is contained, the Cu content is preferably 0.01 to 0.80%.

### Ti: 0.01 to 0.45%

Ti is an element that combines with C and N and thereby prevents excessive precipitation of Cr carbonitrides in the steel, so that deterioration in corrosion resistance (sensitization) is prevented. These effects are obtained when the Ti content is 0.01% or more. However, if the Ti content exceeds 0.45%, workability deteriorates. Therefore, when Ti is contained, the Ti content is preferably in the range of 0.01 to 0.45%. The Ti content is more preferably 0.10% or more. The Ti content is more preferably 0.40% or less.

### Nb: 0.01 to 0.60%

Nb is an element that combines with C and N and thereby prevents sensitization, as is Ti. These effects are obtained when the Nb content is 0.01% or more. However, if the Nb content exceeds 0.60%, workability deteriorates. Therefore, when Nb is contained, the Nb content is preferably in the range of 0.01 to 0.60%. The Nb content is more preferably 0.10% or more. The Nb content is more preferably 0.40% or less.

### V: 0.01 to 0.30%

V is an element that combines with C and N contained in the steel and thereby prevents deterioration in corrosion resistance (sensitization), as are Nb and Ti. This effect is obtained when the V content is 0.01% or more. However, if the V content exceeds 0.30%, workability deteriorates. Therefore, when V is contained, the V content is preferably in the range of 0.01 to 0.30%. The V content is more preferably 0.20% or less, still more preferably 0.15% or less, and yet more preferably 0.10% or less.

Components other than the above components are Fe and incidental impurities.

### [(Cr + Fe) in non-metallic form] / [(Cr + Fe) in metallic form]: 8.0 or less

As described above, when [(Cr + Fe) in non-metallic form] / [(Cr + Fe) in metallic form] on the surface of the chromium-containing steel sheet is controlled in the range of 8.0 or less, smut is removed sufficiently, and the interface resistance reducing effect obtained is higher. Therefore, [(Cr + Fe) in non-metallic form] / [(Cr + Fe) in metallic form] is preferably 8.0 or less. [(Cr + Fe) in non-metallic form] / [(Cr + Fe) in metallic form] is more preferably 7.0 or less and still more preferably 6.0 or less.

[(Cr + Fe) in non-metallic form] / [(Cr + Fe) in metallic form] is the ratio of the total of Cr and Fe present in non-metallic form on the surface of the chromium-containing steel sheet to the total of Cr and Fe present in metallic form on the surface of the chromium-containing steel sheet. [(Cr + Fe) in metallic form] and [(Cr + Fe) in non-metallic form] are the total atomic concentration of Cr and Fe present in metallic form and the total atomic concentration of Cr and Fe present in non-metallic form, respectively, that are measured by X-ray photoelectron spectroscopy analysis on the surface of the chromium-containing steel sheet. The non-metallic form means the form of oxides and hydroxides. Specifically, examples of the non-metallic form of Cr include CrO₂, Cr₂O₃, CrOOH, Cr(OH)₃, and CrOs. Example of the non-metallic form of Fe include FeO, Fe₃O₄, Fe₂O₃, and FeOOH. No particular limitation is imposed on the lower limit of [(Cr + Fe) in non-metallic form] / [(Cr + Fe) in metallic form]. If the ratio is excessively reduced, the thickness of the chromium-containing steel sheet becomes uneven. Specifically, etching proceeds locally, and thin portions are formed, so that the steel sheet can easily break. Preferably, [(Cr + Fe) in non-metallic form] / [(Cr + Fe) in metallic form] is 2.0 or more.

[(Cr + Fe) in non-metallic form] / [(Cr + Fe) in metallic form] is determined as follows. Specifically, X-ray electron spectroscopy (hereinafter referred to as XPS) measurement is performed on the surface of the steel sheet, and obtained peaks of Cr are separated into peaks of Cr present in metallic form and peaks of Cr present in non-metallic form. Similarly, obtained peaks of Fe are separated into peaks of Fe present in metallic form and peaks of Fe present in non-metallic form. Then the total atomic concentration of Cr present in non-metallic form and Fe present in non-metallic form is computed and divided by the total atomic concentration of Cr present in metallic form and Fe present in metallic form which is also computed to thereby determine the above ratio.

Specifically, a 10 mm square specimen is cut from the steel sheet. The specimen is subjected to measurement using an X-ray photoelectron spectrometer (X-tool manufactured by ULVAC-PHI, Inc.) with an Al-Kα monochromatic X-ray source under the condition of an extraction angle of 45 degrees. The peaks of Cr and Fe are separated into peaks of Cr and Fe present in metallic form and peaks of Cr and Fe present in non-metallic form. The total atomic concentration of Cr present in non-metallic form and Fe present in non-metallic form is computed and divided by the total atomic concentration of Cr present in metallic form and Fe present in metallic form which is also computed to thereby determine the ratio. The peaks are separated by removing the background of the spectrum using the Shirley method and using a Gauss-Lorentz complex function (the ratio of the Lorentz function: 30%).

The thickness of the chromium-containing steel sheet is preferably 50 um or less. When the thickness is 50 um or less, an increase in the weight of the battery can be easily prevented. The thickness is more preferably 30 um or less. The thickness of the chromium-containing steel sheet is preferably 5 um or more. When the thickness is 5 um or more, a significant reduction in the efficiency of production of the chromium-containing steel sheet can be prevented, and an increase in manufacturing cost can also be prevented.

### (2) Method for manufacturing chromium-containing steel sheet for current collector of nonaqueous electrolyte secondary battery

Next, a method for manufacturing the chromium-containing steel sheet for a current collector of a nonaqueous electrolyte secondary battery according to the embodiment of the present invention will be described. The method for manufacturing the chromium-containing steel sheet for a current collector of a nonaqueous electrolyte secondary battery according to the embodiment of the present invention includes the step of preparing a chromium-containing steel sheet used as a raw material (raw material chromium-containing steel sheet), a first immersion treatment step, and a second immersion treatment step.

### [Step of preparing raw material chromium-containing steel sheet]

The step of preparing the raw material chromium-containing steel sheet is the step of preparing the chromium-containing steel sheet used as the raw material. No particular limitation is imposed on the raw material chromium-containing steel sheet. For example, a raw material chromium-containing steel sheet having the chemical composition described above may be produced as follows.

Specifically, a steel slab having the chemical composition described above is hot rolled to obtain a hot rolled steel sheet, and the hot rolled steel sheet is optionally subjected to hot rolled steel sheet annealing and pickling. Then the resulting hot rolled steel sheet is subjected to cold rolling to obtain a cold rolled steel sheet with a desired thickness. For example, when a chromium-containing steel sheet with a final thickness of 10 um is manufactured, cold rolled steel sheet annealing is optionally performed in the cold rolling process, and the resulting steel sheet is further subjected to cold rolling to obtain the final thickness.

No particular limitation is imposed on the conditions for the hot rolling, the cold rolling, the hot rolled steel sheet annealing, the cold rolled steel sheet annealing, etc., and they may be performed according to routine methods. After the cold rolled steel sheet annealing, pickling may be performed. The cold rolled steel sheet annealing may be performed as bright annealing. The steel sheet manufactured as described above is prepared as the raw material chromium-containing steel sheet.

### [First immersion treatment (etching treatment) step]

The raw material chromium-containing steel sheet prepared as described above is subjected to the first immersion treatment (etching treatment). As the first immersion treatment, immersion treatment (etching treatment) is performed as follows. An acidic aqueous solution containing hydrogen peroxide: 0.1 to 5.0% by mass, copper ions: 1.0 to 10.0% by mass, and halide ions: 5.0 to 20.0% by mass and having a pH of 1.0 or less is used as a treatment liquid. The treatment temperature is 30 to 50°C, and the treatment time is 40 to 90 seconds.

By performing the etching treatment described above, the amount of dissolution of the raw material chromium-containing steel sheet can be precisely controlled, and therefore the profile of the irregular structure formed on the surface of the steel sheet can be controlled.

The amount of dissolution of the raw material chromium-containing steel sheet in the etching treatment can be controlled by adjusting the type of treatment liquid used for the etching treatment, the temperature of the treatment liquid, and the treatment time. During the etching treatment, the steel sheet surface dissolves nonuniformly because the steel sheet surface includes easily dissolvable portions and non-easily dissolvable portions. If the amount of dissolution during the etching treatment is insufficient, the dissolution does not proceed over the entire surface, so that Sa cannot be increased sufficiently. When the amount of dissolution during the etching treatment is in an optimal range, the etching proceeds in the easily dissolvable portions, and Sa can be increased sufficiently. In this case, the top ends of the protruding portions (mountain portions) can be sharpened, and therefore the value of Ssk can be positive (more than 0). If the amount of dissolution during the etching treatment is excessively large, Sa can be increased. However, since the etching proceeds also in the non-easily dissolvable portions, the top ends of the protruding portions (mountain portions) are flattened, so that the value of Ssk becomes negative (less than 0).

### Hydrogen peroxide: 0.1 to 5.0% by mass

If the concentration of hydrogen peroxide in the treatment liquid is less than 0.1% by mass, the ability to remove copper-containing products precipitated on the steel sheet surface is low, so that the etching treatment cannot be performed continuously. If the concentration of hydrogen peroxide exceeds 5.0% by mass, its effect is saturated. Therefore, the concentration of hydrogen peroxide is preferably 0.1 to 5.0% by mass.

### Copper ions: 1.0 to 10.0% by mass

If the concentration of copper ions in the treatment liquid is less than 1.0% by mass, the etching ability of the treatment liquid is low, so that the desired irregular profile is not obtained. If the concentration of copper ions exceeds 10.0% by mass, the amount of products adhering to the steel sheet surface is large. In this case, even when the second immersion treatment in the next step is performed, smut etc. cannot be removed sufficiently. Therefore, the concentration of copper ions is preferably 1.0 to 10.0% by mass. The concentration of copper ions is more preferably 2.0% by mass or more and still more preferably 5.0% by mass or more.

### Halide ions: 5.0 to 20.0% by mass

If the concentration of halide ions in the treatment liquid is less than 5.0% by mass, a passive film present on the steel sheet surface cannot be broken sufficiently, so that the etching cannot proceed sufficiently. If the concentration of halide ions exceeds 20.0% by mass, local pitting corrosion is accelerated, and it is feared that holes may be formed in the steel sheet. Therefore, the concentration of halide ions is preferably 5.0 to 20.0% by mass. The concentration of halide ions is more preferably 10.0% by mass or more. The concentration of halide ions is still more preferably 15% by mass or less. No particular limitation is imposed on the type of halide ion source. For example, the halide ion source is preferably halogenated hydrogen or a halide of an alkali metal and more preferably hydrochloric acid or sodium chloride. The halide ions are preferably chloride ions.

### pH: 1.0 or less

If the pH of the treatment liquid exceeds 1.0, its etching ability deteriorates, so that the desired irregular structure profile cannot be formed on the steel sheet surface. Therefore, the pH of the treatment liquid is 1.0 or less. The lower the pH of the treatment liquid, the better. The pH is more preferably 0.1 or less.

The treatment liquid (aqueous solution) described above can be prepared by mixing an aqueous hydrogen peroxide solution, a copper compound capable of supplying copper ions, a halide component capable of supplying halide ions, and water and stirring the mixture until uniform.

Treatment temperature (temperature of treatment liquid): 30 to 50°C

If the treatment temperature is lower than 30°C, the etching ability deteriorates, and this causes an increase in the treatment time. If the treatment temperature exceeds 50°C, the stability of the treatment liquid deteriorates. Therefore, the treatment temperature is set to 30 to 50°C.

### Treatment time (immersion time): 40 to 90 seconds

If the treatment time is shorter than 40 seconds, the amount of etching is insufficient. If the treatment time exceeds 90 seconds, the prescribed irregular structure profile cannot be formed on the steel sheet surface. In addition, deterioration in productivity occurs. Therefore, the treatment time is set to 40 to 90 seconds. The amount of etching varies depending on the type of chromium-containing steel. It is therefore more preferable that the treatment time is adjusted within the range of 40 to 90 seconds according to the steel type.

No particular limitation is imposed on the conditions other than the above-described conditions, and a routine method may be used. In the above-described treatment, the raw material chromium-containing steel sheet is immersed in the aqueous solution used as the treatment liquid. However, the aqueous solution used as the treatment liquid may be dropped or sprayed onto the raw material chromium-containing steel sheet so long as the steel sheet and the aqueous solution come into contact with each other. In these cases, the treatment time is the time of contact between the raw material chromium-containing steel sheet and the aqueous solution.

### [Second immersion treatment (smut removing treatment) step]

After the first immersion treatment, the raw material chromium-containing steel sheet is further subjected to the second immersion treatment. The second immersion treatment is
(A) immersion treatment in which an acidic aqueous solution containing hydrogen peroxide is used with the treatment temperature and the treatment time set to 30 to 60°C and 5 to 120 seconds, respectively,
(B) immersion treatment in which an aqueous solution containing nitric acid is used with the treatment temperature and the treatment time set to 30 to 60°C and 5 to 120 seconds, respectively, or
(C) immersion treatment that is a combination of (A) and (B). In this manner, adhering substances such as smut formed during the first immersion treatment (etching treatment) can be dissolved (removed).

Specifically, when smut (a mixture containing C, N, S, O, Fe, Cr, Ni, and Cu as main components and having high electrical resistance) etc. are formed on the surface of the steel sheet and these (such as smut) remain on the surface after the first immersion treatment, these may cause an increase in interface resistance, although the desired irregular structure is obtained on the steel sheet surface. However, by performing the treatment (A), (B), or (C) after the first immersion treatment, the smut is removed, and the interface resistance reducing effect can be obtained stably. Examples of the acidic aqueous solution containing hydrogen peroxide include an aqueous solution mixture of hydrogen peroxide and sulfuric acid. Examples of the aqueous solution containing nitric acid include an aqueous nitric acid solution.

When the aqueous solution mixture of hydrogen peroxide and sulfuric acid is used, it is preferable that the concentration of hydrogen peroxide is 0.5 to 10.0% by mass and that the concentration of sulfuric acid is 1.0 to 10.0% by mass. When the aqueous nitric acid solution is used, it is preferable that the concentration of nitric acid is 1.0 to 40.0% by mass. A component of the aqueous solution mixture of hydrogen peroxide and sulfuric acid other than the hydrogen peroxide and the sulfuric acid is basically water, and a component of the aqueous nitric acid solution other than the nitric acid is basically water.

The treatment temperature in the second immersion treatment (the temperature of the treatment liquid) is preferably 30 to 60°C for both (A) and (B).

Moreover, the longer the treatment time (immersion time), the further the removal of smut is facilitated. However, if the treatment time is excessively long, the effect is saturated, or the productivity deteriorates. Therefore, the treatment time is preferably 5 to 120 seconds for both (A) and (B). The treatment time is more preferably 30 seconds or longer. The treatment time is more preferably 90 seconds or shorter. In the treatment (C), no particular limitation is imposed on the order of the treatment (A) and the treatment (B). Preferably, in the treatment (C), the treatment (A) is performed, and then the treatment (B) is performed.

When immersion treatment that uses the aqueous solution containing nitric acid is performed as in (B) or (C), the adhering substances such as smut formed during the first immersion treatment (etching treatment) can be dissolved (removed) more effectively, and the interface resistance reducing effect can be further increased.

In the second immersion treatment, the surface of the chromium-containing steel sheet under the treatment may be optionally rubbed with, for example, a nonwoven fabric wiper. In this case, smut etc. can be easily removed, and the interface resistance reducing effect can be more stably obtained. In the treatment described above, the raw material chromium-containing steel sheet is immersed in the aqueous solution used as the treatment liquid. However, for example, the aqueous solution used as the treatment liquid may be dropped or sprayed onto the raw material chromium-containing steel sheet so long as the steel sheet and the aqueous solution come into contact with each other. In these cases, the treatment time is the time of contact between the raw material chromium-containing steel sheet and the aqueous solution. Instead of subjecting the steel strip to the continuous treatment, the steel strip may be formed into a current collector shape and then subjected to the second immersion treatment.

### EXAMPLES

Raw material chromium-containing steel sheets having chemical compositions shown in Table 1 (with the balance being Fe and incidental impurities) and a thickness of 10 um were prepared. Then the prepared raw material chromium-containing steel sheets were subjected to the first immersion treatment (etching treatment) and the second immersion treatment (smut removing treatment) under conditions shown in Tables 2 and 3 to thereby obtain chromium-containing steel sheets for current collectors of nonaqueous electrolyte secondary batteries (samples Nos. 1, 3 to 8, 11 to 17). One of the raw material steel sheets as prepared, which is not subjected to the treatments described above, was used as sample No. 2 ("-" in the manufacturing conditions in Tables 2 and 3 indicates that the corresponding treatment was not performed). The compositions of treatment liquids (etching treatment liquids A1 to A4) used in the first immersion treatment and the compositions of aqueous solutions (smut removing treatment liquids B1 to B2 and E) used in the second immersion treatment are as follows.

### <Etching treatment liquid A1>

Hydrogen peroxide: 0.2% by mass
Copper ions: 1.5% by mass
Chloride ions: 10.0% by mass
Balance: water
pH: 0.05

The copper ions and the chloride ions are derived from copper sulfate pentahydrate and hydrochloric acid, respectively.

### <Etching treatment liquid A2>

Hydrogen peroxide: 0.3% by mass
Copper ions: 9.0% by mass
Chloride ions: 10.0% by mass
Balance: water
pH: 0.05

The copper ions and the chloride ions are derived from copper sulfate pentahydrate and hydrochloric acid, respectively.

### <Etching treatment A3>

Hydrogen peroxide: 2.0% by mass
Copper ions: 2.0% by mass
Chloride ions: 10.0% by mass
Balance: water
pH: 0.05

The copper ions and the chloride ions are derived from copper sulfate pentahydrate and hydrochloric acid, respectively.

### <Etching treatment liquid A4>

Hydrogen peroxide: 0.3% by mass
Copper ions: 2.0% by mass
Chloride ions: 15.0% by mass
Balance: water
pH: 0.05

The copper ions and the chloride ions are derived from copper sulfate pentahydrate and hydrochloric acid, respectively.

### <Smut removing treatment liquid B1>

Hydrogen peroxide: 2.0% by mass
Sulfuric acid: 4.0% by mass
Balance: water

### <Smut removing treatment liquid B2>

Hydrogen peroxide: 3.0% by mass
Sulfuric acid: 6.0% by mass
Balance: water

### <Smut removing treatment liquid E>

Nitric acid: 30% by mass
Balance: water

For each of the chromium-containing steel sheets manufactured as described above, Sa and Ssk were measured according to ISO 25178. A laser microscope (VK-X250/X260 manufactured by KEYENCE CORPORATION) was used for the measurement. Specifically, a test specimen was cut from the manufactured chromium-containing steel sheet, and the surface profile in a 50 um × 50 um region on each of the opposite surfaces of the test specimen was measured to obtain the data thereabout using the laser microscope with an objective lens with a magnification of 150X. The data obtained was analyzed using analysis software "Multi-file Analysis Application" attached to the device to determine Sa and Ssk on each of the opposite surfaces of the test specimen. Before the analysis of Sa and Ssk, image processing was performed. Specifically, portions in which the amount of light was outside a threshold range were removed, and interpolation was performed. Moreover, smoothing processing was performed using the Gaussian function, and a cutting level is set to thereby remove noise etc. Then reference plane setting was performed to set a reference plane of the measurement, and quadric surface correction was performed to correct a curved surface to a flat surface. The type of filter was Gaussian, and a cutoff wavelength specified for an S-filter was 0.5 um. The results of the measurement are shown in Tables 2 and 3. For all the test specimens, the values of Sa and Ssk were substantially the same on both sides. Therefore, in Tables 2 and 3, the values of Sa and Ssk measured on one of the surfaces of each test specimen are shown as representative values.

For each of samples Nos. 11 to 17, [(Cr + Fe) in non-metallic form] / [(Cr + Fe) in metallic form] was computed using the method described above. The results are also shown in Table 3.

Moreover, the chromium-containing steel sheets manufactured as described above were used to evaluate their corrosion resistance, electrode resistance, rate characteristics, and cycle characteristics as follows.

### [Evaluation of corrosion resistance]

One of the chromium-containing steel sheets manufactured as described above was used as a working electrode, and Li metal foils were used as a counter electrode and a reference electrode. In an electrolyte (1M LiPF₆, ethylene carbonate : diethyl carbonate = 1:1 (volume ratio)), the current density of the chromium-containing steel sheet was observed during potential scanning in the potential range described below to thereby evaluate corrosion resistance in the battery environment.

In the evaluation, the potential was increased from the initial immersion potential (immersion potential at the start of the test) to 5.0 V, then the potential was lowered to 0.0 V, and next, the potential was increased to the initial immersion potential. The evaluation was performed until the potential reached the initial immersion potential.

In this evaluation, when the current density is low, corrosion products etc. are not formed on the surface of the chromium-containing steel sheet, and also no corrosion pits are formed. In this case, it can be judged that sufficient corrosion resistance can be obtained in the battery environment. The measurement was performed at 25°C in an argon atmosphere with a dew-point temperature of -70°C or lower.

### Potential scanning method

Potential scanning range: initial immersion potential (immersion potential at the start of the test) → 5.0 V → 0.0 V → initial immersion potential

The potential is the potential V (vs. Li/Li⁺) with respect to the Li metal foil used as the counter electrode.

### Scanning rate: 5 mV/s

The evaluation criteria for the corrosion resistance are shown below. The evaluation results are shown in Tables 2 and 3.
o (pass): The absolute value of the maximum current density is 100 µA/cm² or less.
× (fail): The absolute value of the maximum current density is more than 100 µA/cm².

A coin-shaped cell of a nonaqueous electrolyte lithium ion secondary battery having the following battery structure was produced, and its electrode resistance, rate characteristics, and cycle characteristics were evaluated under the following conditions.

### [Production of electrodes and production of battery cell]

### (Battery structure)

Coin-shaped cell (positive electrode area: 15 mmφ, negative electrode area: 16 mmφ)
Positive electrode active material: LiNi_{0.6}Mn_{0.2}Co_{0.2}O₂ (Ni:Mn:Co = 6:2:2 (atomic ratio))
Positive electrode conductive assistant: acetylene black
Positive electrode binder: polyvinylidene fluoride
The mixing ratio in the positive electrode is active material:conductive assistant:binder = 94:3:3.
Positive electrode current collector: Al foil
Negative electrode active material: natural graphite
Negative electrode thickener: carboxymethyl cellulose
Negative electrode binder: styrene butadiene rubber
The mixing ratio in the negative electrode is active material:thickener:binder = 98:1:1.
Negative electrode current collector: one of the chromium-containing steel sheets manufactured as described above
Electrolyte: 1M LiPF₆, ethylene carbonate:ethyl methyl carbonate:dimethyl carbonate = 1:1:1 (volume ratio), vinylene carbonate (1 wt%)
Separator: polypropylene-made separator

### [Evaluation of electrode resistance]

After the production of the electrodes, the negative electrode (produced by coating the surface of the negative electrode current collector with a mixture of the negative electrode active material, the negative electrode thickener, and the negative electrode binder) was subjected to measurement of the resistance in the thickness direction by the four-probe method (low resistivity meter Loresta EP manufactured by Mitsubishi Chemical Corporation, probes used: BSP probes (four probes)). The evaluation area was 5 cm², and the average of three measurements was used.

The evaluation criteria for the electrode resistance are as follows. The evaluation results are shown in Tables 2 and 3.
⊚ (pass): The value of the electrode resistance is 0.35 Q or less.
∘ (pass): The value of the electrode resistance is more than 0.35 Q and 0.60 Q or less.
× (fail): The value of the electrode resistance is more than 0.60 Ω.

### [Evaluation of rate characteristics]

After the production of the coin-shaped cell of the nonaqueous electrolyte lithium ion secondary battery having the above-described battery structure, the rate characteristics were evaluated under the following conditions.

### (Test conditions)

Charging: 0.1C constant current constant voltage; after the voltage has reached 4.2 V, the charging is stopped when the current value reaches 0.01C.
Pause: 10 minutes
Discharging: 1C constant current; the discharging is stopped when the voltage reaches 2.5 V. Alternatively, 5C constant current; the discharging is stopped when the voltage reaches 2.5 V.

### Temperature: 25°C

The evaluation criteria for the rate characteristics are as follows. The evaluation results are shown in Tables 2 and 3.
⊚ (pass): The ratio of the discharge capacity at 5C to the discharge capacity at 1C (capacity retention) is 60% or more.
o (pass): The ratio of the discharge capacity at 5C to the discharge capacity at 1C is 50% or more and less than 60%.
× (fail): The ratio of the discharge capacity at 5C to the discharge capacity at 1C is less than 50%.

The ratio (%) of the discharge capacity at 5C to the discharge capacity at 1C was computed as 100 × (the discharge capacity at 5C / the discharge capacity at 1C).

### [Evaluation of cycle characteristics]

After the production of the coin-shaped cell of the nonaqueous electrolyte lithium ion secondary battery having the above-described battery structure, the cycle characteristics were evaluated under the following conditions.

### (Test conditions)

Charging: 1C constant current constant voltage; after the voltage has reached 4.2 V, the charging is stopped when the current value reaches 0.1C.
Pause: 10 minutes
Discharging: 1C constant current; the discharging is stopped when the voltage reaches 2.5 V.
Temperature: 25°C
1 cycle: charging → pause → discharging → pause
Number of cycles: 300 cycles

The evaluation criteria for the cycle characteristics are as follows. The evaluation results are shown in Tables 2 and 3.
⊚ (pass): The discharge capacity retention at the 300th cycle is 96% or more.
∘ (pass): The discharge capacity retention at the 300th cycle is 90% or more and less than 96%.
× (fail): The discharge capacity retention at the 300th cycle is less than 90%.

The discharge capacity retention (%) at the 300th cycle was computed as 100 × (the discharge capacity at the 300th cycle / the discharge capacity at the first cycle).

**[Table 1]**

| Steel No. | Chemical composition (% by mass) | | | | | | | | | |
|---|---|---|---|---|---|---|---|---|---|---|
| | C | Si | Mn | P | S | Cr | Ni | Al | N | Other components |
| A | 0.006 | 0.26 | 0.42 | 0.027 | 0.001 | 10.95 | 0.14 | 0.045 | 0.006 | Ti: 0.24, V: 0.05 |
| B | 0.034 | 0.24 | 0.51 | 0.026 | 0.005 | 16.17 | 0.15 | 0.002 | 0.041 | - |
| C | 0.009 | 0.15 | 0.17 | 0.027 | 0.002 | 20.70 | 0.15 | 0.032 | 0.009 | Ti: 0.29, Cu: 0.43 |
| D | 0.005 | 0.31 | 0.16 | 0.026 | 0.001 | 19.19 | 0.26 | 0.008 | 0.007 | Mo: 1.83, Nb: 0.35 |
| E | 0.041 | 0.54 | 0.92 | 0.033 | 0.004 | 18.19 | 8.06 | 0.001 | 0.041 | Cu: 0.19, Mo: 0.17 |

**[Table 2]**

| Sample No. | Steel No. | Manufacturing conditions | | | | | | Arithmetic mean height Sa (µm) | Skewness Ssk | Evaluation results | | | | | | | Remarks |
|---|---|---|---|---|---|---|---|---|---|---|---|---|---|---|---|---|---|
| | | First immersion treatment (etching treatment) | | | Second immersion treatment (smut removing treatment) | | | | | Corrosion resistance | Electrode resistance | | Rate characteristics | | Cycle characteristics | | |
| | | Treatment liquid | Treatment temperature (°C) | Treatment time (seconds) | Treatment liquid | Treatment temperature (°C) | Treatment time (seconds) | | | | Resistance value (Ω) | Judgement | Capacity retention 5C/1C (%) | Judgement | Discharge capacity retention (%) | Judgement | |
| 1 | A | A1 | 35 | 45 | B1 | 40 | 60 | 0.24 | 0.29 | ○ | 0.51 | ○ | 53 | ○ | 93 | ○ | Example |
| 2 | B | - | - | - | - | - | - | 0.08 | -0.85 | ○ | 1.80 | × | 40 | × | 83 | × | Comparative Example |
| 3 | | A1 | 35 | 30 | B1 | 40 | 60 | 0.13 | -0.59 | ○ | 0.84 | × | 47 | × | 88 | × | Comparative Example |
| 4 | | A1 | 35 | 60 | B1 | 40 | 60 | 0.17 | 0.35 | ○ | 0.42 | ○ | 57 | ○ | 95 | ○ | Example |
| 5 | | A1 | 35 | 100 | B1 | 40 | 60 | 0.37 | -1.45 | ○ | 1.28 | × | 43 | × | 85 | × | Comparative Example |
| 6 | C | A2 | 40 | 90 | B2 | 35 | 60 | 0.36 | 0.25 | ○ | 0.37 | ○ | 58 | ○ | 95 | ○ | Example |
| 7 | D | A3 | 40 | 90 | B2 | 35 | 60 | 0.43 | 0.12 | ○ | 0.56 | ○ | 53 | ○ | 93 | ○ | Example |
| 8 | E | A4 | 40 | 75 | B2 | 35 | 60 | 0.35 | 0.31 | ○ | 0.40 | ○ | 51 | ○ | 91 | ○ | Example |

| | | | | | | | | | | | | | | | | | |
|---|---|---|---|---|---|---|---|---|---|---|---|---|---|---|---|---|---|
| Underlines mean outside the range of the invention. | | | | | | | | | | | | | | | | | |

**[Table 3]**

| Sample No. | Steel No. | Manufacturing conditions | | | | | | | | | Arithmetic mean height Sa (Nm) | Skewness Ssk | [(Cr + Fe) in non-metallic form] / [(Cr + Fe) in metallic form] | Evaluation results | | | | | | | Remarks |
|---|---|---|---|---|---|---|---|---|---|---|---|---|---|---|---|---|---|---|---|---|---|
| | | First immersion treatment (etching treatment) | | | Second immersion treatment (smut removing treatment) | | | | | | | | | Corrosion resistance | Electrode resistance | | Rate characteristics | | Cycle characteristics | | |
| | | | | | First | | | Second | | | | | | | | | | | | | |
| | | Treatment liquid | Treatment temperature (°C) | Treatment time (seconds) | Treatment liquid | Treatment temperature (°C) | Treatment time (seconds) | Treatment liquid | Treatment temperature (°C) | Treatment time (seconds) | | | | | Resistance value (Ω) | Judgement | Capacity retention 5C/1C (%) | Judgement | Discharge capacity retention (%) | Judgement | |
| 11 | A | A1 | 35 | 45 | B1 | 40 | 60 | E | 55 | 60 | 0.26 | 0.31 | 6.8 | ○ | 0.34 | ⊚ | 60 | ⊚ | 96 | ⊚ | Example |
| 12 | B | A1 | 35 | 60 | E | 55 | 60 | - | - | - | 0.19 | 0.37 | 3.2 | ○ | 0.28 | ⊚ | 61 | ⊚ | 96 | ⊚ | Example |
| 13 | | A1 | 35 | 60 | B1 | 40 | 60 | - | - | - | 0.17 | 0.35 | 7.6 | ○ | 0.42 | ○ | 57 | ○ | 95 | ○ | Example |
| 14 | | A1 | 35 | 60 | B1 | 40 | 60 | E | 55 | 60 | 0.20 | 0.38 | 3.3 | ○ | 0.30 | ⊚ | 60 | ⊚ | 97 | ⊚ | Example |
| 15 | C | A2 | 40 | 90 | B2 | 35 | 60 | E | 55 | 60 | 0.37 | 0.26 | 3.4 | ○ | 0.25 | ⊚ | 63 | ⊚ | 98 | ⊚ | Example |
| 16 | D | A3 | 40 | 90 | B2 | 35 | 60 | E | 55 | 60 | 0.45 | 0.13 | 3.6 | ○ | 0.35 | ⊚ | 61 | ⊚ | 96 | ⊚ | Example |
| 17 | E | A4 | 40 | 75 | B2 | 35 | 60 | E | 55 | 60 | 0.36 | 0.31 | 4.9 | ○ | 0.27 | ⊚ | 64 | ⊚ | 97 | ⊚ | Example |

Tables 2 and 3 clearly show the following.
(a) In all the Examples, the electrode resistance was low, and the desired rate characteristics and the desired cycle characteristics were obtained.
(b) However, in samples Nos. 2, 3, and 5 that are Comparative Examples, the electrode resistance was not sufficiently low, and the desired rate characteristics and the desired cycle characteristics were not obtained.

Table 3 clearly shows the following.
(c) In all the Examples in which the treatment in the aqueous solution containing nitric acid was additionally performed, the electrode resistance was significantly low, and the rate characteristics and the cycle characteristics were further improved.

## Claims

1. A chromium-containing steel sheet for a current collector of a nonaqueous electrolyte secondary battery, the chromium-containing steel sheet having a chemical composition comprising Cr in an amount of 10% by mass or more,
wherein a parameter Sa defined in ISO 25178 is from 0.15 um to 0.50 um inclusive, and wherein a parameter Ssk defined in ISO 25178 is more than 0.

2. The chromium-containing steel sheet for a current collector of a nonaqueous electrolyte secondary battery according to claim 1, wherein [(Cr + Fe) in non-metallic form] / [(Cr + Fe) in metallic form] is 8.0 or less,
where [(Cr + Fe) in non-metallic form] / [(Cr + Fe) in metallic form] is the ratio of the total of Cr and Fe present in non-metallic form on a surface of the chromium-containing steel sheet to the total of Cr and Fe present in metallic form on the surface of the chromium-containing steel sheet.
